# FASCICULE DE BREVET EUROPEEN

(11) **EP 0 701 007 B1**
(45) Date de publication et mention de la délivrance du brevet: **01.04.1998**
(21) Numéro de dépôt: 95402019.4
(22) Date de dépôt: 06.09.1995
(51) Int. Cl.: C23C 22/18, C23C 22/74

(54) **Procédé d'isolement d'une tole magnetique**
Verfahren zum Isolieren von magnetischen Blechen
Process for insulating magnetic sheet

(30) Priorité: 12.09.1994 FR 9410860
(43) Date de publication de la demande: 13.03.1996
(73) Titulaire: GEC ALSTHOM TRANSPORT SA, 75116 Paris (FR)
(72) Inventeur: Roche, Alain, c/o Université Claude Bernard, F-69600 Villeurbanne (FR)
(74) Mandataire: Fournier, Michel

(56) Documents cités:
- EP-A- 0 459 541
- FR-A- 1 123 537
- FR-A- 2 176 647
- FR-A- 2 369 352
- VIDE, LES COUCHES MINCES, vol. 228, 1 Août 1985 PARIS FR, pages 471-478, PERNES D. 'iNFLUENCE DES ELEMENTS DE SURFACE SUR LES TRAITEMENT CHIMIQUES CONDITIONNANT L'ADHERENCE DE LA PEINTURE ET DE L'EMAIL SUR DES TOLES D'ACIE EXTRA-DOUX'
- CHEMICAL ABSTRACTS, vol. 109, no. 16, 17 Octobre 1988 Columbus, Ohio, US; abstract no. 133011v, TANAKA 'NONSTICKING INSULATION COATING FOR ELECTRICAL STEEL' page 239; colonne R;
- CHEMICAL ABSTRACTS, vol. 109, no. 22, 28 Novembre 1988 Columbus, Ohio, US; abstract no. 193944y, SHISHIDO 'Electrically insulating film on iron-chromium alloy strip'

## Description

La présente invention concerne les tôles magnétiques utilisées notamment dans la réalisation des stators de moteurs électriques.

Il est bien connu que pour limiter les pertes par courants de Foucault, les pièces magnétiques des appareils électriques tels que moteurs, générateurs ou transformateurs, sont réalisées par un assemblage de tôles magnétiques isolées les unes des autres.

Actuellement, les tôles au silicium utilisées par exemple pour la réalisation des stators de moteurs électriques soudés sont isolées par un vernis phosphaté; or ces stators doivent subir une phase de détensionnement à 600°C qui provoque un "amaigrissement" de l'épaisseur d'isolant. Pour éviter que le serrage des tôles soit amoindri par cet amaigrissement, il est nécessaire de provoquer cet amaigrissement avant le montage et le soudage des tôles. Cette opération supplémentaire grève le coût de réalisation des stators.

Le document FR 1 123 537 décrit un procédé pour la réalisation d'une tôle magnétique pour application électrotechnique isolée par un phosphate de fer-manganèse conforme au préambule de la revendication principale.

Un but de la présente invention est de réaliser une tôle dont l'isolement ne "maigrisse" pas sous l'effet d'une température de 600°C.

Il n'est guère possible, avec les procédés d'isolement des tôles utilisés actuellement, d'obtenir une couche d'isolant dont l'épaisseur dépasse 2 microns environ. Or l'augmentation des fréquences de fonctionnement des moteurs électriques, qui engendre une augmentation des courants de Foucault, requiert un isolement plus important. L'épaisseur de 2 microns s'avère insuffisante et il est nécessaire de pouvoir obtenir une couche d'isolation d'épaisseur voisine de 5 à 10 microns; de plus cette couche doit être très régulière, sans "manque" sur la tôle.

Un autre but de l'invention est de définir un procédé de réalisation d'une couche isolante permettant une croissance régulière et uniformément répartie, pouvant atteindre 10 microns d'épaisseur.

Tous ces buts sont réalisés par l'invention qui a pour objet un procédé pour la réalisation d'une tôle magnétique au silicium isolée, pour application électrotechnique, par un phosphate de fer-manganèse, ledit procédé comprend les opérations suivantes:
1. On soumet la tôle à une attaque acide ou basique pour éliminer la couche superficielle de la tôle qui contient un excès de silicium et d'aluminium,
2. On rince la tôle,
3. On soumet le tôle à un contact avec une solution d'acide phosphorique contenant du phosphate de fer et du phosphate de manganèse pendant une durée nécessaire à l'obtention de l'épaisseur souhaitée de la couche d'isolant, l'opération de contact avec ladite solution comprenant une première phase de contact avec une solution de pH compris entre 7 et 8 pour favoriser la germination des cristaux de phosphate de fer-manganèse et une seconde phase de contact avec une solution de pH compris entre 2 et 4 favorisant le développement desdits cristaux.

Le contact entre la tôle est le bain est réalisé soit par trempage, soit par enduction.

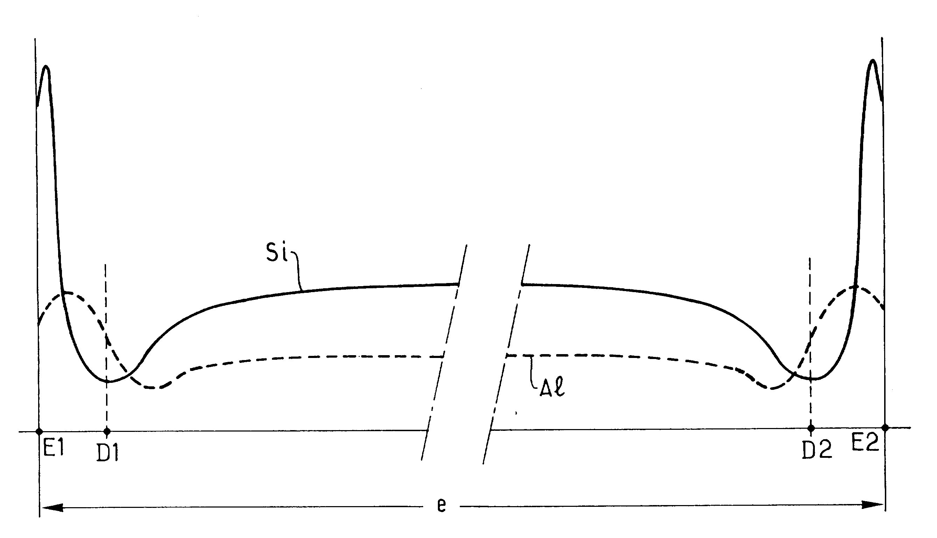

L'invention est expliquée maintenant en détail, avec référence au dessin annexé dans lequel la figure unique représente les proportions au sein d'une tôle au silicium des quantités de silicium et d'aluminium.

Le procédé de phosphatation au fer et au manganèse inventé par le demandeur se fonde sur l'observation que dans une tôle au silicium, la proportion de silicium n'est pas constante dans toute l'épaisseur de la tôle.

Comme le montre le diagramme de la figure annexée, dans lequel l'axe des abscisses est dirigé perpendiculairement au plan de la tôle d'épaisseure e, entre un premier bord E1 et un second bord E2, la proportion de silicium, représentée en ordonnées avec une échelle arbitraire Si (courbe en traits pleins), présente une concentration particulièrement élevée au voisinage des bords. Il en est de même de l'aluminium Al (courbe en traits tiretés), que les fabricants de tôles incorporent, pour des raisons de facilité de fabrication, dans les tôles au silicium. Or, le silicium et l'aluminium sont des poisons pour la germination et la croissance des cristaux de phosphates de fer-manganèse.

C'est pourquoi, selon l'invention, la phosphatation de la tôle comprend une première phase d'attaque pour éliminer la couche suprficielle de la tôle. L'attaque est menée jusqu'à ce que la proportion de silicium soit voisine des minima présentés par la courbe, soit au voisinage des points D1 et D2 du diagramme; l'effet de poison du silicium ainsi que celui de l'aluminium est alors considérablement affaibli de sorte que la phosphatation pourra se développer.

L'attaque de la couche superficielle peut être effectuée soit au moyen d'un acide, soit au moyen d'une base. Le pH de la solution d'attaque, ainsi que la durée de l'attaque, sont déterminés expérimentalement par l'examen microscopique d'échantillons de la tôle.

Après rinçage, la tôle est soumise à une opération de contact avec une solution d'acide phosphorique contenant du phosphate de fer et du phosphate de manganèse.

Le contact peut être effectué soit par trempage dans des bains, soit par enduction, c'est-à-dire passage entre des rouleaux imprégnés de solution. Cette dernière méthode se prête mieux à une automatisation du traitement des tôles.

De préférence, le contact de la tôle avec la solution peut être effectuée en deux phases:
- une première phase avec une solution de pH compris entre 7 et 8, de manière à favoriser la germination des cristaux de phosphate de fer-manganèse,
- une seconde phase, avec une solution de pH compris entre 2 et 4, permettant la croissance des cristaux de phosphate.

La durée des contacts dans chacune des phases peut être déterminée expérimentalement pour permettre d'obtenir l'épaisseur désirée de la couche isolante et une croissance régulière et homogène des cristaux.

Le phosphate de fer-manganèse a été choisi pour plusieurs raisons:
- sa bonne résistivité électrique,
- la forme régulière des cristaux, sensiblement cubiques, permettant d'obtenir une couche particulièrement homogène sur la surface de la tôle,
- l'insensibilité aux températures voisines de 600°C auxquelles peuvent être soumises les tôles après assemblage,
- la possibilité d'obtenir des couches d'isolant d'épaisseur pouvant facilement atteindre 10 microns.

L'invention s'applique à toutes les tôles magnétiques au silicium dans toutes les applications électrotechniques.

## Revendications

1. Procédé pour la réalisation d'une tôle magnétique pour application électrotechnique isolée par un phosphate de fer-manganèse, caractérisé en ce que ledit procédé comprend les opérations suivantes:
1. On soumet la tôle à une attaque acide ou basique pour éliminer la couche superficielle de la tôle qui contient un excès de silicium et d'aluminium
2. On rince la tôle
3. On soumet le tôle à un contact avec une solution d'acide phosphorique contenant du phosphate de fer et du phosphate de manganèse pendant une durée nécessaire à l'obtention de l'épaisseur souhaitée de la couche d'isolant, ladite opération de contact avec ladite solution comprenant une première phase de contact avec une solution de pH compris entre 7 et 8 pour favoriser la germination des cristaux de phosphate de fer-manganèse et une seconde phase de contact avec une solution de pH compris entre 2 et 4 favorisant le développement desdits cristaux.

2. Procédé selon la revendication 1, caractérisé en ce que le contact entre la tôle et le bain est réalisé soit par trempage, soit par enduction.

## Patentansprüche

1. Verfahren zur Ausführung eines magnetischen Blechs für elektrotechnische Anwendungen, das mit einem Eisen/Manganphosphat isoliert ist, **dadurch gekennzeichnet,** daß das Verfahren die folgenden Schritte umfaßt:
1. das Blech wird einem sauren oder basischen Angriff unterzogen, um die Oberflächenschicht des Blechs zu beseitigen, die einen Überschuß an Silicium und Aluminium enthält,
2. das Blech wird gespült,
3. das Blech wird für eine Dauer, die zum Erreichen der gewünschten Dicke der Isoliermittelschicht nötig ist, mit einer Phosphorsäurelösung in Kontakt gebracht, die Eisenphosphat und Manganphosphat enthält, wobei der Schritt des Kontaktes mit der Lösung eine erste Phase des Kontakts mit einer Lösung mit einem pH-Wert zwischen 7 und 8, um die Keimbildung der Eisen/Manganphosphat-Kristalle zu fördern, und eine zweite Phase des Kontakts mit einer Lösung mit einem pH-Wert zwischen 2 und 4 umfaßt, der die Entwicklung der Kristalle fördert.

2. Verfahren nach Anspruch 1, dadurch gekennzeichnet, daß der Kontakt zwischen dem Blech und dem Bad entweder durch Eintauchen oder durch Beschichtung verwirklicht wird.

## Claims

1. Method for making a magnetic lamination for electrotechnical applications insulated by iron-manganese phosphate, said method comprising the following operations:
1 - The lamination is treated with an acid or basic medium to eliminate the surface layer of the lamination that contains excess silicon and aluminium
2 - The lamination is rinsed
3 - The lamination is brought into contact with a solution of phosphoric acid containing iron phosphate and manganese phosphate for sufficient time to obtain an insulative layer of the required thickness, said operation of contact with said solution comprising a first phase of contact with a solution at a pH between 7 and 8 to encourage the seeding of iron-manganese phosphate crystals and a second phase of contact with a solution at a pH between 2 and 4 to encourage growth of said crystals.

2. Method according to claim 1 characterised in that the contact between the lamination and the solution is effected either by dipping or by coating.
